# EUROPÄISCHE PATENTANMELDUNG

(11) **EP 1 100 245 A2**
(43) Veröffentlichungstag der Anmeldung: **16.05.2001**
(21) Anmeldenummer: 00118095.9
(22) Anmeldetag: 23.08.2000
(51) Int. Cl.: H04M 3/51

(54) **Verfahren zur Rufweiterleitung**

(30) Priorität: 13.11.1999 DE 19954806
(71) Anmelder: Tenovis GmbH & Co. KG, 60326 Frankfurt (DE)
(72) Erfinder: Barthel, Marco, 74366 Kirchheim (DE); Menk, Klaus-Dieter, 65597 Hünfelden-Ohren (DE)
(74) Vertreter: Bohnenberger, Johannes, Dr.

(57) **Zusammenfassung**

Es wird ein Verfahren zur Rufweiterleitung eines Anrufs zwischen einem ersten Anrufverarbeitungssystem (10) und einem zweiten Anrufverarbeitungssystem (20) über ein Telefonnetz (30) vorgeschlagen, das der sicheren Weiterleitung des Anrufs dadurch dient, daß Daten, die beim ersten Anrufverarbeitungssystem (10) bereits gesammelt und/oder generiert wurden, über eine Telekommunikationsverbindung (20) zum zweiten Anrufverarbeitungssystem (40) übertragen werden und dem weitergeleiteten Anruf sicher zugeordnet werden.

## Beschreibung

### Stand der Technik

Die Erfindung geht aus von einem Verfahren zur Rufweiterleitung nach der Gattung des Hauptanspruchs. Es ist allgemein bekannt, Anrufverarbeitungssysteme, insbesondere Callcenter, über ein Telefonnetz zu verbinden. Weiterhin ist allgemein bekannt, Anrufverarbeitungssysteme bzw. Teile von diesen, beispielsweise zur Erweiterung der Anrufannahmekapazität bei großer Auslastung, mittels einer Telekommunikationsverbindung zur Datenkommunikation, insbesondere über ein Local Area Network (LAN) oder ein Wide Area Network (WAN), miteinander zu verbinden. Bei der Weiterleitung eines eingehenden Anrufs von einem ersten Anrufverarbeitungssystem zu einem zweiten Anrufverarbeitungssystem, wobei über die Telekommunikationsverbindung anrufspezifische Daten übertragen werden, kann die falsche Zuordnung von Daten zu einem zum zweiten Anrufverarbeitungssystem weitergeleiteten Anruf zum Verlust der Daten und/oder des Anrufs führen. Eine Übertragung der anrufspezifischen Daten über das Telefonnetz, beispielsweise über den D-Kanal, ist wegen der Datenmenge und gegebenenfalls verschiedenen Netz-Providern nicht möglich.

### Vorteile der Erfindung

Das erfindungsgemäße Verfahren mit den Merkmalen des Hauptanspruchs hat demgegenüber den Vorteil, daß eine falsche Zuordnung von über die Telekommunikationsverbindung übertragenen Daten zu dem über das Telefonnetz weitergeleiteten Anruf vermieden wird. Hierdurch ist es weiterhin möglich, daß der Anruf über das Telefonnetz beliebiger Netzbetreiber vom ersten Anrufverarbeitungssystem zum zweiten Anrufverarbeitungssystem weitergeleitet wird.

Durch die in den Unteransprüchen aufgeführten Maßnahmen ist eine vorteilhafte Weiterbildung und Verbesserung des im Hauptanspruch angegebenen Verfahrens möglich.

Besonders vorteilhaft ist, daß zur Weiterleitung des Anrufs über das Telefonnetz eine Rufnummer aus einer Mehrzahl von reservierten Rufnummern verwendet wird, wobei die eine Rufnummer dem Anruf durch das erste Anrufverarbeitungssystem zugeordnet wird. Hierdurch ist eine besonders einfache Weiterleitung des Anrufs vom ersten Anrufverarbeitungssystem zum zweiten Anrufverarbeitungssystem möglich, wobei die Verwaltung der reservierten Rufnummern zur Anrufweiterleitung allein vom ersten Anrufverarbeitungssystem übernommen wird.

Weiterhin ist von Vorteil, daß zeitlich vor der Zuordnung der einen Rufnummer zu dem Anruf ein Austausch von Signalisierungsinformationen zur Freigabe der einen Rufnummer zwischen dem ersten Anrufverarbeitungssystem und dem zweiten Anrufverarbeitungssystem durchgeführt wird. Durch diese dynamische Anforderung einer Rufnummer wird die Sicherheit gegenüber Fremdanrufen, die zufällig eine der reservierten Rufnummern wählen, erhöht.

Weiterhin ist von Vorteil, daß für jede der Mehrzahl von reservierten Rufnummern die Kennung jeweils unterschiedlich und ihr eindeutig zugeordnet ist und daß jede der Mehrzahl von reservierten Rufnummern die ihr zugeordnete Kennung umfaßt. Hierdurch ist eine sehr einfache Übertragung der Kennung möglich.

### Weiterhin ist von Vorteil, daß das zweite Anrufverarbeitungssystem mittels einer Systemrufnummer telefonisch erreichbar ist und daß die reservierten Rufnummern jeweils aus der Systemrufnummer und der Kennung gebildet werden. Hierdurch ist ein einfaches Schema der reservierten Rufnummern möglich.

Weiterhin ist von Vorteil, daß die Daten insbesondere die Rufnummer des Anrufers und die durch das erste Anrufverarbeitungssystem abzufragenden Daten umfassen. Hierdurch werden alle bezüglich eines Anrufs relevanten Daten vom ersten Anrufverarbeitungssystem abgefragt, so daß die Struktur und Systematik der Generierung bzw. der Sammlung von Daten im ersten Anrufverarbeitungssystem lokalisiert bleibt und nicht zum zweiten Anrufverarbeitungssystem übertragen werden muß.

### Zeichnung

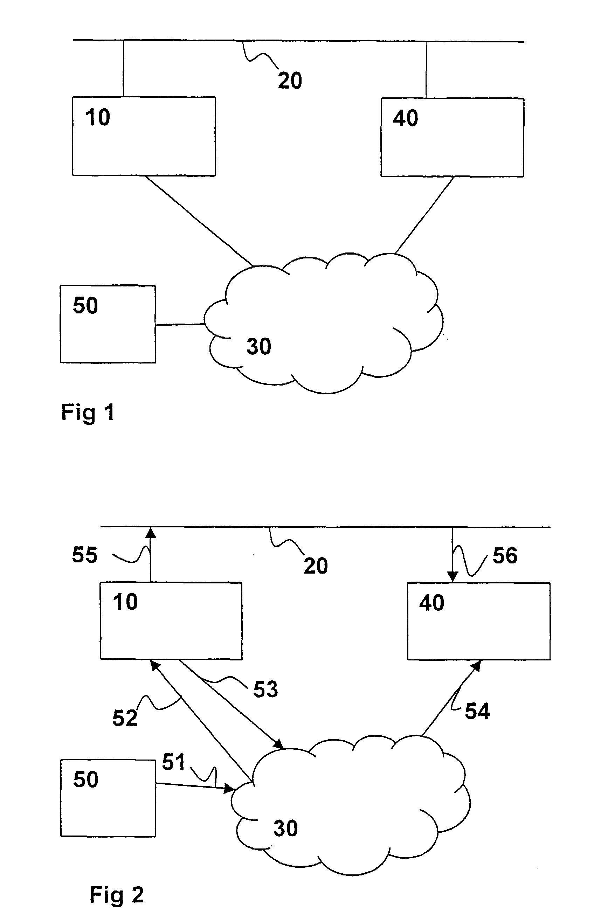

Ein Ausführungsbeispiel der Erfindung ist in der Zeichnung dargestellt und in der nachfolgenden Beschreibung näher erläutert. Es zeigen Figur 1 eine erfindungsgemäße Systemarchitektur mit einem ersten Anrufverarbeitungssystem, einem zweiten Anrufverarbeitungssystem, einem Telefonnetz und einer Telekommunikationsverbindung zur Datenkomunikation und Figur 2 ein Kommunikationsschema der erfindungsgemäßen Systemarchitektur mit einem eingehenden und weiterzuleitenden Anruf.

### Beschreibung des Ausführungsbeispiels

Figur 1 stellt eine erfindungsgemäße Systemarchitektur mit einem ersten Anrufverarbeitungssystem 10, einem zweiten Anrufverarbeitungssystem 40, einem Telefonnetz 30, einer Telekommunikationsverbindung zur Datenkommunikation 20 und einem Telekommunikationsteilnehmer 50 dar. Das erste Anrufverarbeitungssystem 10 und das zweite Anrufverarbeitungssystem 40 sind insbesondere als Callcenter mit mehreren Bearbeitungsstationen mit automatischer und/oder menschlicher Bedienung ausgebildet. Weiterhin können als Anrufverarbeitungssysteme 10, 40 auch Teile eines Callcenters vorgesehen sein. Die Anrufverarbeitungssysteme 10, 40 sind jeweils mit der Telekommunikationsverbindung 20 zur Datenkommunikation verbunden. Die Telekommunikationsverbindung 20 zur Datenkommunikation ist erfindungsgemäß insbesondere als Telekommunikationsnetz, beispielsweise als Local Area Network (LAN) oder als Wide Area Network (WAN), ausgebildet. Das erste und das zweite Anrufverarbeitungssystem 10, 40 werden im folgenden auch als erstes bzw. zweites Callcenter 10, 40 bezeichnet. Daneben sind die Anrufverarbeitungssysteme 10, 40 jeweils mit dem Telefonnetz 30 verbunden. Das Telefonnetz 30 ist erfindungsgemäß das öffentliche Telefonnetz und/oder das Telefonnetz eines beliebigen Netzbetreibers. Das Telefonnetz 30 kann dabei als analoges, digitales oder als in Teilen analoges und in Teilen digitales Telefonnetz 30 ausgeführt sein. An dieses Telefonnetz 30 ist der Telekommunikationsteilnehmer 50 angeschlossen, der für eine Vielzahl von mit dem Telefonnetz 30 verbundenen Teilnehmern steht.

Erfindungsgemäß dient die in Figur 1 dargestellte Systemarchitektur der Vernetzung der beiden Callcenter 10, 40 über beliebige Netzbetreiber bzw. Provider. Es wird angenommen, daß ein Anruf beim ersten Callcenter 10 eingeht und zum zweiten Callcenter 40 geroutet werden soll, wobei im ersten Callcenter 10 Informationen bezüglich des Anrufs gesammelt und/oder generiert werden, die nicht verlorengehen dürfen. Diese Informationen werden über die Telekommunikationsverbindung 20 zur Datenkommunikation zum zweiten Callcenter 40 übertragen. Im zweiten Callcenter 40 ist es dann notwendig, die übertragenen Daten dem Anruf zuzuordnen. Dies kann problematisch sein, wenn beispielsweise mehrere Anrufe gleichzeitig getätigt werden, die sich möglicherweise im Telefonnetz 30 überholen können; d.h. die Reihenfolge ihres Eingangs beim ersten Callcenter 10 differiert von der Reihenfolge ihres Eingangs beim zweiten Callcenter 40. Die Zuordnung der vom ersten Callcenter 10 zum zweiten Callcenter 40 über die Telekommunikationsverbindung 20 übertragenen Daten zu einem vom ersten Callcenter 10 zum zweiten Callcenter 40 weitergeleiteten Anruf geschieht in Abhängigkeit einer Kennung, die sowohl über die Telekommunikationsverbindung 20 als auch über das Telefonnetz 30 übertragen wird. Zur Weiterleitung von Anrufen vom ersten Callcenter 10 zum zweiten Callcenter 40 wird eine Mehrzahl von reservierten Rufnummern definiert, die in einer vorteilhaften Ausführungsform der Erfindung die Kennung jeweils umfassen, so daß jede der reservierten Rufnummern eindeutig einer Kennung zugeordnet werden kann. In einer besonders vorteilhaften Ausführungsform der Erfindung bestehen die reservierten Rufnummern aus der Kennung und einer Systemrufnummer, die für alle reservierten Rufnummern gleich ist. Somit wird beispielsweise mit der Systemrufnummer das zweite Callcenter 40 über das Telefonnetz 30 adressiert und die sich an die Systemrufnummer anschließende Kennung dient der Identifizierung der reservierten Rufnummer.

Zur Illustration des erfindungsgemäßen Verfahrens ist in Figur 2 ein Kommunikationsschema der erfindungsgemäßen Systemarchitektur dargestellt.

Der Telekommunikationsteilnehmer 50, der im folgenden auch als Anrufer 50 bezeichnet wird, ist mit dem Telefonnetz 30 verbunden und in der Lage, Telefonverbindungen, d.h. Anrufe, über das Telefonnetz 30, beispielsweise zum ersten Callcenter 10 zu initiieren.

Der Anrufer 50 baut eine Telefonverbindung zum ersten Callcenter 10 über das Telefonnetz 30 auf, indem der Anrufer 50 erste Signalisierungsinformationen 51 zum Telefonnetz 30 überträgt, wonach das Telefonnetz 30 anschließend zweite Signalisierungsinformationen 52 zum ersten Callcenter 10 überträgt. Es sei nun der Fall angenommen, daß der Anruf zum zweiten Callcenter 40 weitergeleitet werden soll, weshalb das erste Callcenter 10 dritte Signalisierungsinformationen 53 zum Telefonnetz 30 überträgt, woraufhin das Telefonnetz 30 seinerseits vierte Signalisierungsinformationen 54 zum zweiten Callcenter 40 überträgt.

Die dritten und vierten Signalisierungsinformationen 53, 54 umfassen die für die Weiterleitung des Anrufs benutzte reservierte Rufnummer aus der Mehrzahl von reservierten Rufnummern zur Weiterleitung von Anrufen vom ersten Callcenter 10 zum zweiten Callcenter 40.

Um die Wahrscheinlichkeit von Verlusten von Anrufen oder von im ersten Callcenter 10 gesammelten bzw. generierten Informationen zu vermeiden, muß sichergestellt werden, daß die für die Weiterleitung des Anrufs benutzte reservierte Rufnummer für das Zeitintervall, in dem der weitergeleitete Anruf aktiv ist, auch nur für die Weiterleitung des Anrufs genutzt wird, d.h. es muß sichergestellt werden, daß die für eine Weiterleitung des Anrufs zu benutzende reservierte Rufnummer frei und nicht belegt ist. Dies wird erfindungsgemäß mittels zwei Ausführungsvarianten des erfindungsgemäßen Verfahrens unterschiedlich gelöst.

Bei einer ersten Ausführungsvariante - die auch als statische Konfiguration der reservierten Rufnummern bezeichnet wird - werden die reservierten Rufnummern vom ersten Callcenter 10 verwaltet. Dies bedeutet, daß im ersten Callcenter 10 ständig die Information vorliegt, welche der reservierten Rufnummern belegt und welche der reservierten Rufnummern, insbesondere zur Weiterleitung des Anrufs zum zweiten Callcenter 40, belegbar sind. Bei einer solchen statischen Konfiguration prüft also das erste Callcenter 10 vor der Aussendung der dritten Signalisierungsinformationen 53 zum Telefonnetz 30, welche der Mehrzahl von reservierten Rufnummern belegbar sind und benutzt zur Weiterleitung des Anrufs, mittels der vierten Signalisierungsinformationen 54, eine dieser belegbaren Rufnummern.

Bei einer zweiten Variante des erfindungsgemäßen Verfahrens - die auch als dynamische Anforderung der Rufnummer bezeichnet wird - tauscht das erste Callcenter 10 vor der Absendung der dritten Signalisierungsinformationen 53 an das Telefonnetz 30 mit dem zweiten Callcenter 40 nicht dargestellte Signalisierungen aus, mittels derer das zweite Callcenter 40 eine Information darüber zum ersten Callcenter 10 übermittelt, welche der reservierten Rufnummern frei und welche belegt sind. Beim Austausch der Signalisierungen fordert das erste Callcenter 10 zunächst eine belegbare der reservierten Rufnummern beim zweiten Callcenter 40 an, woraufhin das zweite Callcenter 40 beim Vorhandensein einer freien Rufnummer die Information an das erste Callcenter 10 überträgt, daß eine freie Rufnummer unter den reservierten Rufnummern vorhanden ist und daß dies für eine Bestimmte der reservierten Rufnummern zutrifft. Daraufhin sendet das erste Callcenter 10 die dritten Signalisierungsinformationen 53 unter Verwendung der Bestimmten der reservierten Rufnummern zum Telefonnetz 30, um die Weiterleitung des Anrufs, mittels der vierten Signalisierungsinformationen 54, einzuleiten.

Die erste Variante des erfindungsgemäßen Verfahrens hat den Vorteil, daß die Verwaltung der reservierten Rufnummern einfacher gestaltet werden kann, weil lediglich das erste Callcenter 10 die Verwaltung übernimmt. Darüber hinaus kann die Rufweiterleitung schneller durchgeführt werden, weil der Austausch von Signalisierungsinformationen zwischen dem ersten Callcenter 10 und dem zweiten Callcenter 40 entfallen kann. Die zweite Variante des erfindungsgemäßen Verfahrens hat den Vorteil einer erhöhten Sicherheit von Doppelbelegungen von reservierten Rufnummern, weil eine der reservierten Rufnummern auch auf andere Weise als vom ersten Callcenter 10 aus belegt werden könnte, so daß für diesen Fall keine Informationen über die Nichtbelegbarkeit solcher reservierter Rufnummern im ersten Callcenter 10 vorliegen. Insbesondere ist die zweite Variante des Verfahrens bei mehr als zwei miteinander vernetzten Callcentern bzw. Teilen von Callcentern vorteilhaft.

Während oder nach der Weiterleitung des Anrufs vom ersten Callcenter 10 zum zweiten Callcenter 40, d.h. ab der Aussendung der dritten Sigalisierungsinformationen 53, werden Informationen, die im ersten Callcenter 10 bezüglich des Anrufs gesammelt und/oder generiert wurden, an die Telekommunikationsverbindung 20 zur Übertragung zum zweiten Callcenter 40 gesendet. Zur Übertragung der Informationen vom ersten Callcenter 10 zum zweiten Callcenter 40 werden fünfte Signalisierungsinformationen 55 vom ersten Callcenter 10 zur Telekommunikationsverbindung 20 und sechste Signalisierungsinformationen 56 von der Telekommunikationsverbindung 20 zum zweiten Callcenter 40 übertragen. Die Informationen werden mittels der Kennung, die entweder mit den Informationen oder mit den fünften und sechsten Signalisierungsinformationen 55, 56 über die Telekommunikationsverbindung 20 übertragen wurde, dem weitergeleiteten Anruf zugeordnet. Zu den generierten Informationen, die einem Anruf zugeordnet werden, gehört insbesondere die Rufnummer des Anrufers (OAD, ?), die beispielsweise über eine Ruferidentifizierungs-einrichtung ermittelt wurde. Zu den gesammelten Daten gehören Daten, die vom ersten Callcenter 10 vom Anrufer 50, über automatisch agierende interaktive Einrichtungen im ersten Callcenter 10 oder über Agenten Applikationen bzw. über IVR-Systeme (Interactive-Voice-Response-Systeme) abgefragt werden. Durch die Verbindung der beiden Callcenter 10, 40 über die Telekommunikationsverbindung 20 ist es möglich, die im ersten Callcenter 10 gesammelten bzw. generierten Informationen auch beim Überlauf des Anrufs in das zweite Callcenter 40 zu erhalten, so z.B. der Anrufername oder Informationen, die über eine Spracheinheit gesammelt wurden. Ein Callcenternetz, d.h. die Verbindung aus einer Mehrzahl von Callcentern, kann so auf die gleichen Informationen zugreifen und ein Anrufer 50 wird nicht mehrmals nach den gleichen Informationen gefragt. Außerdem ist es erfindungsgemäß möglich, gegebenenfalls dem zweiten Callcenter 40 (eines möglicherweise fremden) Betreibers die Bearbeitung von zumindest momentan über die Bearbeitungskapazität des ersten (eigenen) Callcenters 10 hinausgehenden Anrufen zu überlassen, wobei jedoch die Art und Weise der Abfrage bzw. der Generierung der im ersten Callcenter 10 generierten bzw. abgefragten Informationen nicht zum zweiten Callcenter 40 gelangt, sondern nur die bereits generierten bzw. abgefragten Informationen als solche.

## Patentansprüche

1. Verfahren zur Rufweiterleitung eines Anrufs zwischen einem ersten Anrufverarbeitungssystem (10) und einem zweiten Anrufverarbeitungssystem (40) über ein Telefonnetz (30), wobei die Anrufverarbeitungssysteme (10, 40) über eine Telekommunikationsverbindung (20) zur Datenkommunikation, insbesondere ein Local area network (LAN) oder ein Wide area network (WAN), verbunden sind, dadurch gekennzeichnet, daß folgende Schritte ausgeführt werden:
- in einem ersten Schritt werden vom ersten Anrufverarbeitungssystems (10) bezüglich eines beim ersten Anrufverarbeitungssystem (10) eingehenden Anrufs Daten generiert und/oder gesammelt,
- in einem zweiten Schritt werden die vom ersten Anrufverarbeitungssystems (10) generierten und/oder gesammelten Daten über die Telekommunikationsverbindung (20) zum zweiten Anrufverarbeitungssystem (40) übertragen und es wird der beim ersten Anrufverarbeitungssystem (10) eingegangene Anruf über das Telefonnetz (30) ebenfalls zum zweiten Anrufverarbeitungssystem (40) weitergeleitet,
- in einem dritten Schritt werden die übertragenen Daten und der weitergeleitete Anruf im zweiten Anrufverarbeitungssystem (40) in Abhängigkeit einer Kennung einander zugeordnet, wobei die Kennung sowohl über die Telekommunikationsverbindung (20) zusammen mit den Daten als auch über das Telefonnetz (30) übertragen wird.

2. Verfahren nach Anspruch 1, dadurch gekennzeichnet, daß zur Weiterleitung des Anrufs über das Telefonnetz (30) eine Rufnummer aus einer Mehrzahl von reservierten Rufnummern verwendet wird, wobei die eine Rufnummer dem Anruf durch das erste Anrufverarbeitungssystem (10) zugeordnet wird.

3. Verfahren nach Anspruch 2, dadurch gekennzeichnet, daß zeitlich vor der Zuordnung der einen Rufnummer zu dem Anruf zur Freigabe der einen Rufnummer ein Austausch von Signalisierungen zwischen dem ersten Anrufverarbeitungssystem (10) und dem zweiten Anrufverarbeitungssystem (40) durchgeführt wird.

4. Verfahren nach Anspruch 2 oder 3, dadurch gekennzeichnet, daß für jede der Mehrzahl von reservierten Rufnummern die Kennung jeweils unterschiedlich und ihr eindeutig zugeordnet ist und daß jede der Mehrzahl von reservierten Rufnummern die ihr zugeordnete Kennung umfaßt.

5. Verfahren nach Anspruch 4, dadurch gekennzeichnet, daß das zweite Anrufverarbeitungssystem (40) mittels einer Systemrufnummer telefonisch erreichbar ist und daß die reservierten Rufnummern jeweils aus der Systemrufnummer und der Kennung gebildet werden.

6. Verfahren nach einem der vorhergehenden Ansprüche, dadurch gekennzeichnet, daß die Daten, die Rufnummer des Anrufers und die durch das erste Anrufverarbeitungssystem (10) abzufragenden Daten umfassen.

7. Verfahren nach einem der vorhergehenden Ansprüche, dadurch gekennzeichnet, daß die Anrufweiterleitung zwischen dem ersten Anrufverarbeitungssystem (10) und dem zweiten Anrufverarbeitungssystem (40) über das Telefonnetz (30)eines beliebigen Netzbetreibers geführt wird.
